# EUROPEAN PATENT APPLICATION

(11) **EP 4 276 788 A1**
(43) Date of publication of application: **15.11.2023**
(21) Application number: 21926546.9
(22) Date of filing: 18.02.2021
(51) Int. Cl.: G08G 1/00, G08G 1/09, G08G 1/16

(54) **IMPROVEMENT ITEM DETECTION DEVICE, IMPROVEMENT ITEM DETECTION METHOD, AND PROGRAM**

(71) Applicant: NEC Corporation, 108-8001 Tokyo (JP)
(72) Inventor: YAMANE Takashi, Tokyo 108-8001 (JP)
(74) Representative: Vossius & Partner Patentanwälte Rechtsanwälte mbB
(86) International application number: PCT/JP2021/006144
(87) International publication number: WO 2022/176111

(57) **Abstract**

An acquisition unit (210) acquires sensor information and crew member identification information from a crew member terminal (10). A detection unit (220) detects an improvement-requiring item by processing the sensor information. The improvement-requiring item is an item that needs to be improved by the crew member. A selection unit (230) selects a transmission destination of caution information by using information on the improvement-requiring item. For example, the selection unit (230) selects the transmission destination, for example, by using a type of the detected improvement-requiring item. A transmission unit (240) transmits the caution information to the transmission destination selected by the selection unit (230). The caution information is information indicating that the improvement-requiring item is detected.

## Description

### TECHNICAL FIELD

The present invention relates to an improvement item detection apparatus, an improvement item detection method, and a program.

### BACKGROUND ART

A crew member (for example, a driver) who boards on a vehicle is required of various skills. Then, various techniques have been developed for assisting the crew member.

For example, Patent Document 1 discloses a matter described as follows. First, a terminal apparatus is mounted on a moving body. The terminal apparatus determines, by processing acquired information, whether the moving body or an operator is in a special operation. Examples of the special operation include overspeed, rapid acceleration, rapid deceleration, and the like. Further, when it is determined to be a special operation, the terminal apparatus transmits information on the special operation to an operation monitoring apparatus. The operation monitoring apparatus decides, by using the information acquired from the terminal apparatus, whether notification is required for the moving body or the operator. Then, when the notification is required, the operation monitoring apparatus transmits predetermined information to the terminal apparatus.

Further, Patent Document 2 discloses a drive guide system that computes a degree of hindrance to safe driving by a driver, and gives guidance to the driver and the like according to the degree of hindrance. The degree of hindrance is computed by using information acquired from a sensor mounted on a vehicle. Examples of the sensor include a camera for capturing an image of a face of a driver, a microphone for detecting voice and the like inside a vehicle, a vehicle speed sensor, a satellite positioning system, and the like.

Note that, Patent Document 3 describes that a vehicle control apparatus recognizes a displayed content of a sign located in a periphery of a vehicle, and controls a traveling state of the vehicle according to the displayed content. Further, Patent Document 3 also describes that an alarm sounds when a driver parks a car in a place where there is a "no-parking" sign and leaves the car.

### RELATED DOCUMENT

### PATENT DOCUMENT

Patent Document 1: Japanese Patent Application Publication No. 2003-048447
Patent Document 2: Japanese Patent Application Publication No. 2020-064554
Patent Document 3: International Patent Publication No. WO2016/002276

### SUMMARY OF THE INVENTION

### TECHNICAL PROBLEM

As described above, a crew member of a vehicle is required of various skills. In order to acquire these skills, instruction by an experienced instructor is necessary. However, when the number of crew members who needs to be instructed is large in relation to the number of instructors, a workload on an instructor becomes significant. One example of an object of the present invention is to reduce a workload on an instructor who instructs a crew member of a vehicle.

### SOLUTION TO PROBLEM

According to the present invention, an improvement item detection apparatus is provided, the apparatus including:
an acquisition means for acquiring sensor information indicating a result of detection by a sensor of which a detection target is at least one of an evaluation target being at least one of a vehicle and a crew member of the vehicle, and a periphery of the evaluation target;
a detection means for detecting, by processing the sensor information, an item that needs to be improved by the crew member;
a selection means for selecting, by using information on the item that needs to be improved, a transmission destination of caution information indicating that the item that needs to be improved is detected; and
a transmission means for transmitting the caution information to the transmission destination selected by the selection means.

According to the present invention, an improvement item detection method is provided, the method including,
by a computer executing:
acquisition processing of acquiring sensor information indicating a result of detection by a sensor of which a detection target is at least one of an evaluation target being at least one of a vehicle and a crew member of the vehicle, and a periphery of the evaluation target;
detection processing of detecting, by processing the sensor information, an item that needs to be improved by the crew member;
selection processing of selecting, by using information on the item that needs to be improved, a transmission destination of caution information indicating that the item that needs to be improved is detected; and
transmission processing of transmitting the caution information to the transmission destination selected by the selection means.

According to the present invention, a program is provided, the program causing a computer to include:
an acquisition function of acquiring sensor information indicating a result of detection by a sensor of a which detection target is at least one of an evaluation target being at least one of a vehicle and a crew member of the vehicle, and a periphery of the evaluation target;
a detection function of detecting, by processing the sensor information, an item that needs to be improved by the crew member;
a selection function of selecting, by using information on the item that needs to be improved, a transmission destination of caution information indicating that the item that needs to be improved is detected; and
a transmission function of transmitting the caution information to the transmission destination selected by the selection means.

### ADVANTAGEOUS EFFECTS OF INVENTION

According to the present invention, a workload on an instructor who instructs a crew member of a vehicle is reduced.

### BRIEF DESCRIPTION OF THE DRAWINGS

The above-described object, another object, a feature, and an advantage are further clarified with a preferable example embodiment described in the following and the following drawings accompanying thereto.

Fig. 1 is a diagram for describing a usage environment of an improvement item detection apparatus according to a first example embodiment.
Fig. 2 is a diagram illustrating one example of a functional configuration of a crew member terminal.
Figs. 3A and 3B are diagrams for describing one example of a use method of the crew member terminal.
Fig. 4 is a diagram illustrating a modification example of Fig. 1.
Fig. 5 is a diagram illustrating one example of a functional configuration of the improvement item detection apparatus.
Fig. 6 is a diagram for describing one example of information stored in a target item storage unit.
Fig. 7 is a diagram for describing one example of information stored in the target item storage unit.
Fig. 8 is a diagram for describing one example of information stored in the target item storage unit.
Fig. 9 is a diagram illustrating a modification example of Fig. 7.
Fig. 10 is a diagram illustrating one example of information stored in a crew member information storage unit.
Fig. 11 is a diagram illustrating a hardware configuration example of the improvement item detection apparatus.
Fig. 12 is a flowchart illustrating one example of processing performed by the improvement item detection apparatus.
Fig. 13 is a diagram illustrating a first example of a screen displayed by an instructor apparatus.
Fig. 14 is a diagram illustrating a second example of the screen displayed by the instructor apparatus.
Fig. 15 is a diagram illustrating a functional configuration of an improvement item detection apparatus according to a second example embodiment.
Fig. 16 is a diagram for describing a usage environment of an improvement item detection apparatus according to a third example embodiment.
Fig. 17 is a diagram illustrating one example of a functional configuration of the improvement item detection apparatus according to the third example embodiment.

### EXAMPLE EMBODIMENT

In the following, example embodiments of the present invention will be described with reference to the drawings. Note that, in all of the drawings, a similar component is denoted with similar reference sign, and description thereof is omitted as appropriate.

### (First Example Embodiment)

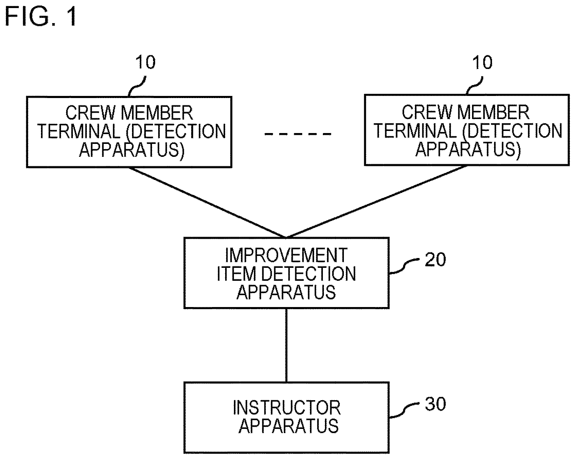

Fig. 1 is a diagram for describing a usage environment of an improvement item detection apparatus 20 according to the present example embodiment. The improvement item detection apparatus 20 is an apparatus for improving a skill of a crew member of a vehicle, and is used together with a crew member terminal 10 (one example of a first apparatus) and an instructor apparatus 30 (one example of a second apparatus). One example of a crew member is a driver, however, the crew member may be a person other than a driver (for example, an attendant). Further, a vehicle is, for example, a vehicle for physical distribution (a truck or a delivery vehicle), however, the vehicle may be a taxi or a bus.

The crew member terminal 10 is a portable communication terminal possessed by a crew member. The crew member terminal 10 is, for example, a smartphone or a tablet terminal, but is not limited thereto. The instructor apparatus 30 is a communication terminal for a person (hereinafter, referred to as an instructor) who instructs a crew member. The instructor apparatus 30 may be a portable terminal or a fixed terminal.

The crew member terminal 10 includes various sensors, for example, an imaging unit. These sensors uses, as a detection target, at least one of: at least one (hereinafter, referred to as an evaluation target) of a vehicle or a crew member; and a periphery of the evaluation target. For example, when the evaluation target is a vehicle, the detection target includes at least one of the vehicle and a periphery of the vehicle (for example, frontward of the vehicle). Further, when the evaluation target is a crew member, the detection target includes the crew member and a periphery of the crew member (for example, an object and a person in front of the crew member). Further, the crew member terminal 10 transmits information indicating a result of detection by the sensor (hereinafter, referred to as sensor information) to the improvement item detection apparatus 20 in real time.

The improvement item detection apparatus 20 detects, by processing the sensor information in real time, an item that needs to be improved by a crew member (hereinafter, referred to as an improvement-requiring item). As described later in detail, the improvement-requiring item includes various items. For example, the improvement-requiring item may be an item related to driving of a vehicle, may be an item related to pre-driving inspection of a vehicle, and may be an item related to work performed when a vehicle is stopped. The work performed when a vehicle is stopped may be work for stopping the vehicle in a safe state, and may be a communication with another person (for example, a customer).

Further, when the improvement-requiring item is detected, the improvement item detection apparatus 20 selects, by using information on the improvement-requiring item, a transmission destination of information indicating that the improvement-requiring item is detected (hereinafter, referred to as caution information). At this occasion, the improvement item detection apparatus 20 selects the transmission destination by using, for example, a type of the detected improvement-requiring item and a degree of severity or a degree of importance of a detected content. Further, the transmission destination of the caution information is selected from among, for example, the crew member terminal 10, the instructor apparatus 30, and both the crew member terminal 10 and the instructor apparatus 30. Then, the improvement item detection apparatus 20 transmits the caution information to the selected transmission destination.

Note that, when the improvement item detection apparatus 20 is used, a plurality of crew members can be assigned to one instructor. In this case, the number of the crew member terminals 10 connected to the improvement item detection apparatus 20 is larger than the number of the instructor apparatuses 30 connected to the improvement item detection apparatus 20. The improvement item detection apparatus 20 may assign, for example, equal to or more than 10 (preferably, equal to or less than 50) crew member terminals 10 to one instructor apparatus 30.

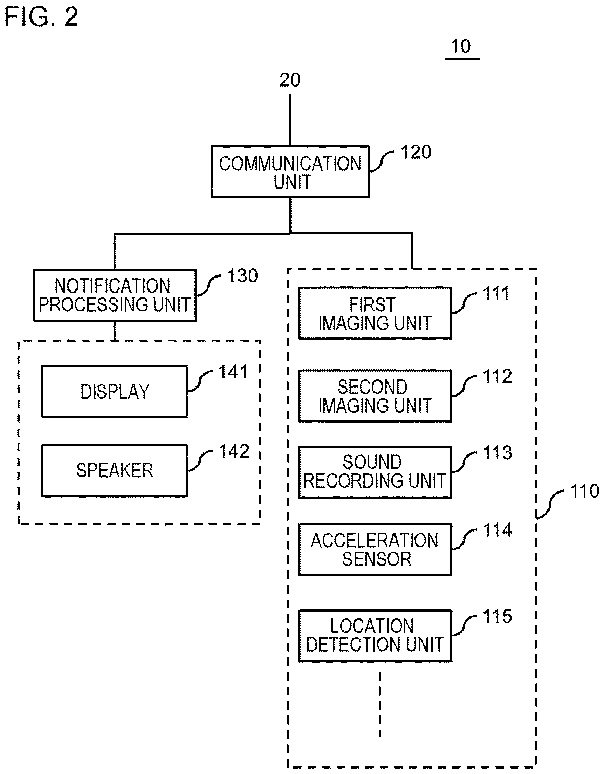

Fig. 2 is a diagram illustrating one example of a functional configuration of the crew member terminal 10. The crew member terminal 10 includes a sensor 110, a communication unit 120, a notification processing unit 130, a display 141, and a speaker 142.

The sensor 110 detects a state and behavior of the above-described detection target, and generates sensor information. In the example illustrated in the present drawing, the sensor 110 includes a first imaging unit 111, a second imaging unit 112, a sound recording unit 113, and an acceleration sensor 114.

The first imaging unit 111 and the second imaging unit 112 capture an image of a periphery of the crew member terminal 10 and generate image data. A frame rate of the image data is, for example, equal to or more than five frames per second (fps), however, an optimum value varies (for example, equal to or more than 10 fps) depending on an application. The first imaging unit 111 and the second imaging unit 112 have opposite image capturing directions with each other. For example, in a case in which the crew member terminal 10 is a smartphone, the first imaging unit 111 is mounted on a back side and the second imaging unit 112 is mounted on a front side. By processing image data generated by the first imaging unit 111 and the second imaging unit 112, for example, behavior and motion of a crew member, a moving state of a vehicle, a peripheral situation of the crew member, and a peripheral situation of the vehicle can be determined.

The sound recording unit 113 generates sound data by recording sound around the crew member terminal 10. By processing the sound data, for example, speech by a crew member and speech by a person around the crew member can be determined.

The acceleration sensor 114 generates acceleration data indicating acceleration applied to the crew member terminal 10. By processing the acceleration data, the acceleration can be determined. Note that, in a case in which velocity of the crew member terminal 10 needs to be computed, it is preferable that the sensor 110 includes a sensor for GPS.

Note that, the sensor 110 may further include another sensor. For example, the sensor 110 may include at least one of a temperature sensor, a brightness sensor, a vibration sensor, and a sensor for fingerprint authentication.

The communication unit 120 transmits the sensor information generated by the sensor 110 to the improvement item detection apparatus 20. The transmission is preferably performed in real time. In this case, there is no need to provide a large capacity storage in the crew member terminal 10.

In the transmission, the communication unit 120 also transmits, to the improvement item detection apparatus 20, information from which a crew member can be identified (hereinafter, referred to as crew member identification information). The crew member identification information may be an ID assigned to a crew member, or may be a terminal identification information assigned to the crew member terminal 10. Further, the communication unit 120 receives the above-described caution information from the improvement item detection apparatus 20.

When the communication unit 120 acquires the caution information, the notification processing unit 130 causes at least one of the display 141 and the speaker 142 to perform output indicating that the caution information is acquired.

Note that, when a predetermined instruction is input via an input unit (for example, a touch panel), the communication unit 120 may suspend transmission of the sensor information to the improvement item detection apparatus 20. This is performed, for example, when a crew member takes a break. Further, when information indicating that the transmission is to be started is further input, the communication unit 120 resumes the transmission of the sensor information. Note that, suspension timing and resumption timing of the transmission is stored in the improvement item detection apparatus 20.

Further, the improvement item detection apparatus 20 may be configured in such a way as to be capable of communicating with the instructor apparatus 30 when a predetermined instruction is input via the input unit (for example, the touch panel). The communication may be performed via the improvement item detection apparatus 20, or may be directly performed between the crew member terminal 10 and the instructor apparatus 30. One example of the communication is a voice call. The function is used, for example, when a crew member decides to contact an instructor immediately.

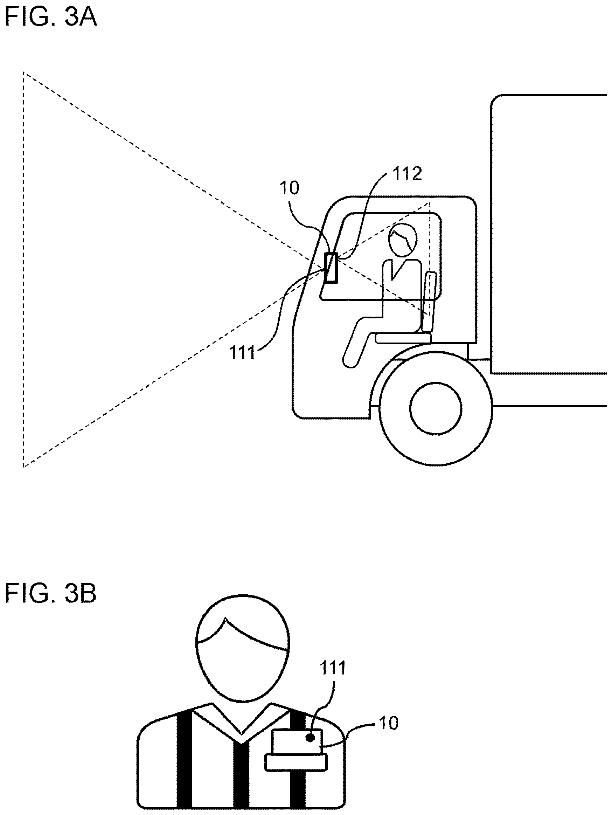

Each diagram in Figs. 3A and 3B is a diagram for describing one example of a use method of the crew member terminal 10. In the example illustrated in the present drawing, the crew member terminal 10 includes the first imaging unit 111 on one side, and includes the second imaging unit 112 on a side opposite to the one side.

As illustrated in Fig. 3A, the crew member terminal 10 is fixed inside a vehicle and in front of a windshield while a crew member is on board the vehicle. In this state, the first imaging unit 111 captures an image of a front environment of the vehicle, and the second imaging unit 112 captures an image of the crew member. Therefore, by analyzing image data generated by the first imaging unit 111, a peripheral situation of the traveling vehicle, velocity and acceleration of the vehicle, whether the vehicle is traveling in accordance with a traffic regulation, and whether there was a possibility that the vehicle would cause an accident can be determined. Further, by analyzing image data generated by the second imaging unit 112, a state of the crew member in the vehicle (for example, a pose and a state of a driver while driving) can be determined.

Further, as illustrated in Fig. 3B, while the crew member is outside the vehicle, the crew member terminal 10 is put in a chest pocket of the crew member. However, the first imaging unit 111 is exposed from the chest pocket. Therefore, by analyzing the image data generated by the first imaging unit 111, a content of work performed by the crew member outside the vehicle can be determined. Further, in a case in which the crew member serves a person, a state (for example, normal or not) and behavior of the person can also be determined.

Note that, in both Figs. 3A and 3B, the sound recording unit 113 of the crew member terminal 10 may generate sound data. In this case, for example, in the example in Fig. 3A, by analyzing voice uttered by the crew member, a state of the crew member can be determined. Further, in the example in Fig. 3B, a content of a conversation between the crew member and a person served by the crew member can be determined.

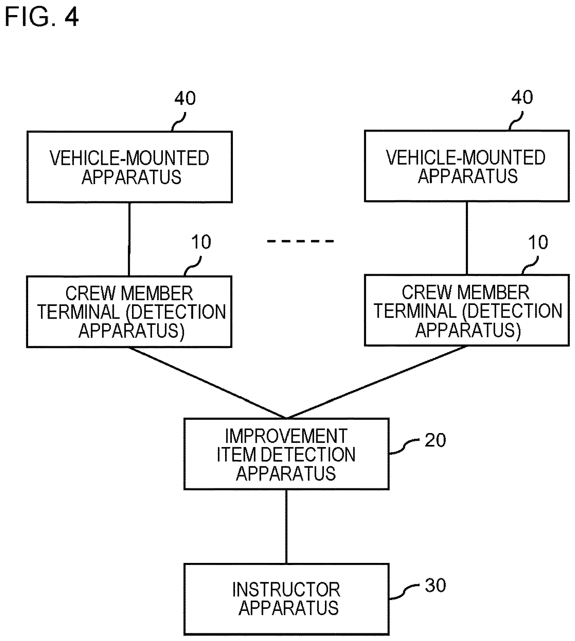

Fig. 4 is a diagram illustrating a modification example of Fig. 1. In the example illustrated in the present drawing, the crew member terminal 10 communicates with a vehicle-mounted apparatus 40, and adds information acquired from the vehicle-mounted apparatus 40 to the sensor information. The information acquired from the vehicle-mounted apparatus 40 indicates a result of detection by a sensor mounted on a vehicle. The detection result includes, for example, at least one of image data generated by a vehicle-mounted camera, velocity data generated by a velocimeter, and data indicating various pieces of operation that a driver has performed on the vehicle. Note that, the crew member terminal 10 communicates with the vehicle-mounted apparatus 40 by using, for example, short-range wireless communication.

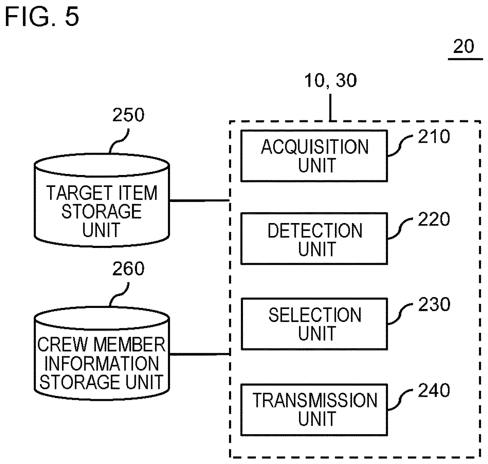

Fig. 5 is a diagram illustrating one example of a functional configuration of the improvement item detection apparatus 20. In the example illustrated in the present drawing, the improvement item detection apparatus 20 includes an acquisition unit 210, a detection unit 220, a selection unit 230, and a transmission unit 240.

The acquisition unit 210 acquires sensor information and crew member identification information from the crew member terminal 10.

The detection unit 220 detects the above-described improvement-requiring item by processing the sensor information. The detection unit 220 detects the improvement-requiring item, for example, by using a detection model. The detection model is generated, for example, by using machine learning, and is stored in a target item storage unit 250.

Further, the detection unit 220 may give a score to the detected improvement-requiring item. The score is used when a crew member is evaluated. Data for giving the score are stored, for example, in the target item storage unit 250. As one example, the target item storage unit 250 stores a score for each item.

The selection unit 230 selects a transmission destination of caution information by using information on the improvement-requiring item. For example, the selection unit 230 selects the transmission destination by using, for example, a type of the detected improvement-requiring item.

As one example, for an item that should be instantly communicated to a crew member, the crew member terminal 10 is included in the transmission destination. In this case, the transmission destination may further include the instructor apparatus 30. Meanwhile, for an item that should be communicated to a crew member via an instructor, the instructor apparatus 30 is selected as the transmission destination.

Note that, the selection unit 230 selects the transmission destination by using information stored in the target item storage unit 250. The target item storage unit 250 stores, for each improvement-requiring item, information indicating a transmission destination. Details of the information stored in the target item storage unit 250 will be described later with reference to another drawing.

Further, the selection unit 230 may select the transmission destination by using a degree of severity or a degree of importance of a detected content. For example, in a case in which a crew member is a driver and velocity of a vehicle exceeds a reference value, the selection unit 230 may select the transmission destination according to the excess value. For example, the selection unit 230 selects the instructor apparatus 30 as the transmission destination when the excess value is equal to or less than a reference value, and selects both the crew member terminal 10 and the instructor apparatus 30 as the transmission destination when the excess value is equal to or more than the reference value.

The transmission unit 240 generates the above-described caution information. The caution information includes, for example, information indicating a content of the detected improvement-requiring item. The content of the improvement-requiring item includes, for example, a date and time of occurrence of improvement-requiring item, a location of occurrence, an item name, and detailed information (for example, a degree of severity or a degree of urgency). At this occasion, the transmission unit 240 may change, depending on the transmission destination, at least a part of the information included in the caution information. In this case, at least a part of one of the caution information transmitted to the crew member terminal 10 and the caution information transmitted to the instructor apparatus 30 is not included in the other one. For example, while the caution information transmitted to the instructor apparatus 30 includes the crew member identification information, the caution information transmitted to the crew member terminal 10 is not required to include the crew member identification information. In this case, the instructor apparatus 30 displays the crew member identification information (for example, a name of a crew member), whereas the crew member terminal 10 does not display the crew member identification information.

Further, the transmission unit 240 transmits the caution information to the transmission destination selected by the selection unit 230. Timing at which the transmission unit 240 transmits the caution information is, for example, in real time. In particular, when there is a severe problem with customer service or a serious traffic violation, it is preferable that the caution information is transmitted immediately. However, the timing of transmission may be timing when a crew member is expected to have completed his/her work, or may be set for each transmission destination.

Note that, the acquisition unit 210 stores the acquired sensor information in a crew member information storage unit 260, in association with a crew member. Details of information stored in the crew member information storage unit 260 will be described later with reference to another drawing.

Further, in the example illustrated in the present drawing, the target item storage unit 250 and the crew member information storage unit 260 is provided in the improvement item detection apparatus 20. However, the target item storage unit 250 and the crew member information storage unit 260 may be provided external to the improvement item detection apparatus 20.

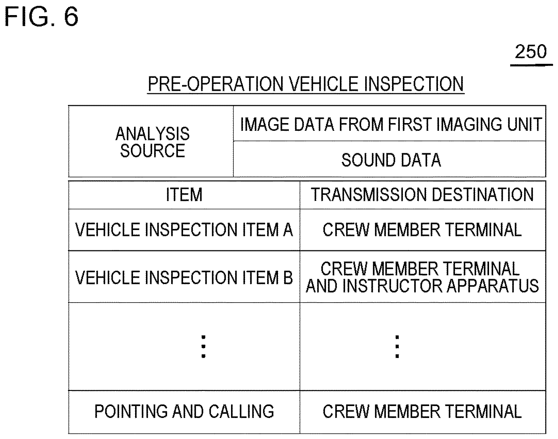

Figs. 6, 7, 8, and 9 are diagrams for describing one example of information stored in the target item storage unit 250. The target item storage unit 250 stores information on the improvement-requiring item. The information on the improvement-requiring item includes a detection model (not illustrated) for detecting the improvement-requiring item, data (in the drawings, referred to as an analysis source) used in the detection model, and information for determining a transmission destination. Herein, the information for determining the transmission destination is stored for each improvement-requiring item.

Herein, in a case in which a plurality of instructors use the improvement item detection apparatus 20, the information for determining the transmission destination may be set for each of the instructors. In this case, the setting is performed by each of the instructors.

In the example illustrated in Fig. 6, the improvement-requiring item relates to vehicle inspection that is to be performed by a crew member before starting work. Further, the presence or absence of the improvement-requiring item and an item name of the improvement-requiring item are determined, for example, by analyzing image data generated by the first imaging unit 111 and sound data generated by the sound recording unit 113.

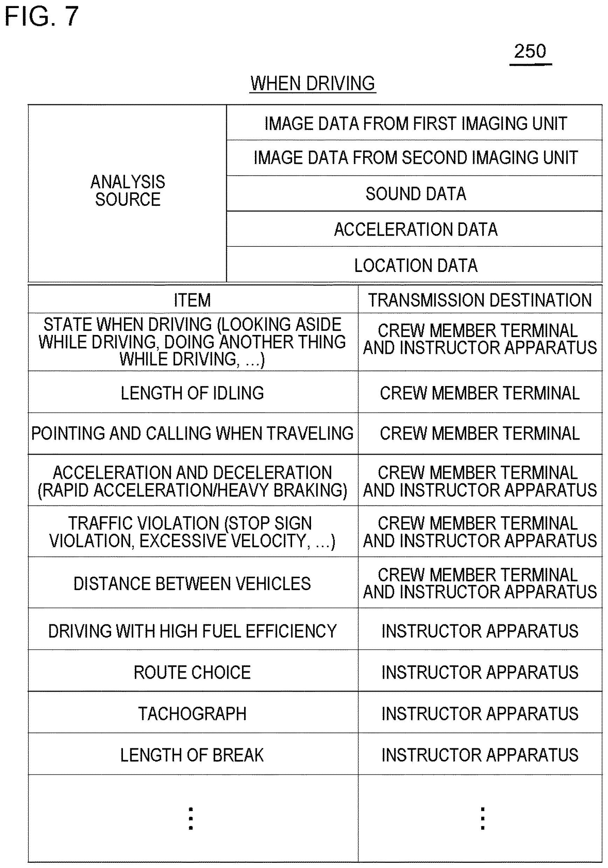

Note that, although it is not illustrated in the present drawing, the target item storage unit 250 may store data for computing a score. For example, the target item storage unit 250 may store a score for each item. The same applies to Figs. 7, 8, and 9. Note that, even identical items may have different degrees of severity or degrees of urgency, depending on contents thereof. In this case, target item storage unit 250 may store a score for each item and for each degree of severity (or degree of urgency).

Further, in the example illustrated in Fig. 7, the improvement-requiring item relates to a skill and an act by a driver while driving a vehicle. As one example, the improvement-requiring item includes a state while driving (whether the driver is concentrating on driving, for example, whether the driver is looking aside while driving or whether the driver is doing another thing while driving), a length of idling, whether the driver is pointing and calling while traveling (or when starting traveling), a degree of acceleration or deceleration, whether the driver is committing a traffic violation (for example, excessive velocity, and stop sign violation), whether there is a sufficient distance between vehicles, whether a route during departure to a destination is appropriate, whether there is a problem with a tachograph, whether the driver is driving with high fuel efficiency, whether timing and a length of a break are appropriate, and the like.

Further, the presence or absence of the improvement-requiring item and an item name of the improvement-requiring item are determined, for example, by analyzing at least one of image data generated by the first imaging unit 111 (specifically, image data capturing a front environment of a vehicle), image data generated by the second imaging unit 112 (specifically, image data capturing a driver), sound data generated by the sound recording unit 113 (specifically, sound data of an inside and a periphery of the vehicle), acceleration data generated by the acceleration sensor 114 (specifically, acceleration data of the vehicle), and location data generated by a location detection unit 115 (specifically, location data of the vehicle).

For example, the state while driving and whether the driver is pointing and calling are determined by analyzing the image data generated by the second imaging unit 112 and the sound data. Further, the length of idling is determined by analyzing the data generated by the first imaging unit 111 and the sound data. Further, the degree of acceleration or deceleration is determined by analyzing the acceleration data.

Further a magnitude of the distance between vehicles is determined by analyzing the image data generated by the first imaging unit 111. Further, whether the driver is committing a traffic violation is determined by using the location data and the image data generated by the first imaging unit 111. Further, whether the driver is driving with high fuel efficiency is determined by using the image data (used, for example, for recognizing regulation velocity) generated by the first imaging unit 111, the acceleration data, and the location data.

Further, determination of whether the driver is committing a traffic violation, and whether the driver is driving with high fuel efficiency may be determined by further using map data including a traffic rule for each location. The tachograph is determined by using, for example, the image data generated by the first imaging unit 111, the acceleration data, and the location data. Further, a traveling route of a vehicle is determined by using the location data.

Further, whether the driver is taking a break is determined by using the image data generated by the second imaging unit 112 and the location data. For example, when a time length for which a vehicle is stopped while the driver is inside the vehicle exceeds a reference, the detection unit 220 determines that the driver is taking a break. However, the detection unit 220 may further determine, by processing the image data generated by the first imaging unit 111, whether the vehicle is caught in a traffic jam, and when the vehicle is caught in a traffic jam, the detection unit 220 may determine that the driver is not taking a break. Further, a break may be determined by using a time period in which transmission of a detection result signal is suspended.

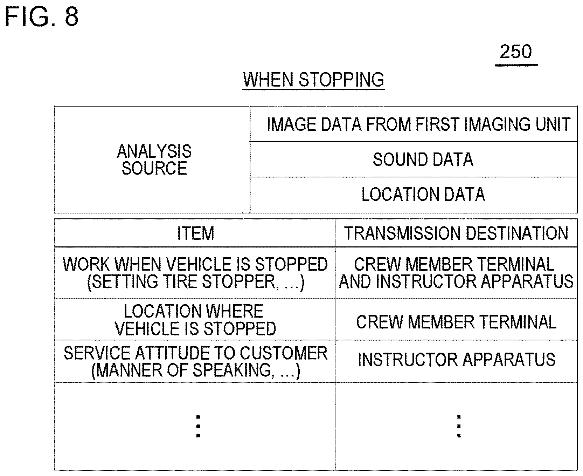

Further, in the example illustrated in Fig. 8, the improvement-requiring item is related to an act by a driver when a vehicle is stopped. As one example, the improvement-requiring item includes work performed when a vehicle is stopped (for example, whether a tire stopper is set), and whether a location where the vehicle is stopped is appropriate (for example, whether the vehicle is stopped in a no-stopping area). Further, a driver may serve a customer while being outside the vehicle. In this case, the improvement-requiring item includes an item (for example, a service attitude to a customer) related to customer service. Further, the presence or absence of these improvement-requiring items is determined by using at least one of the image data generated by the first imaging unit 111 (specifically, an image capturing a periphery of a crew member), the sound data generated by the sound recording unit 113 (specifically, sound from the crew member and a periphery of the crew member), and the location data generated by the location detection unit 115 (specifically, location data of the vehicle).

For example, the work performed when the vehicle is stopped is determined by using the image data generated by the first imaging unit 111. Further, the location where the vehicle is stopped is determined by analyzing the location data. Further, the service attitude to a customer (for example, a manner of speaking) is determined by analyzing a conversation contained in the sound data.

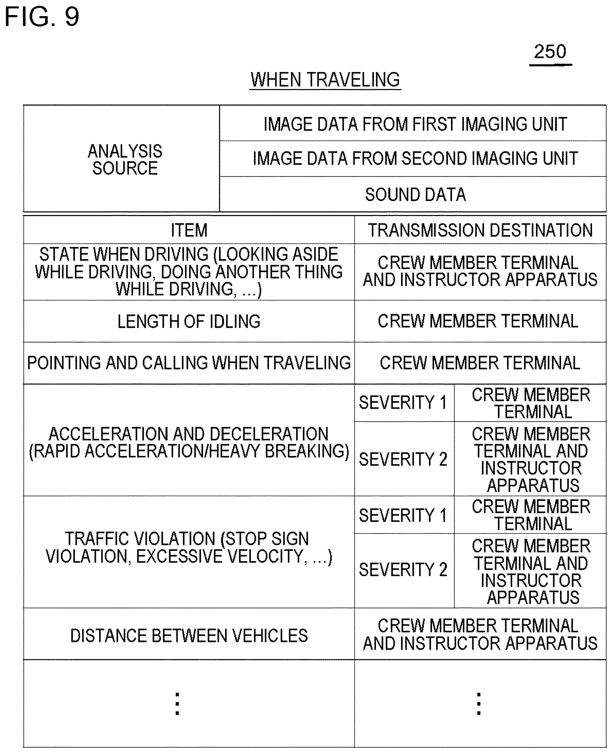

Fig. 9 illustrates a modification example of Fig. 7. In this example, for some items, a transmission destination is set according to a degree of severity (or a degree of urgency). For example, when acceleration or deceleration is equal to or less than a reference value (in the drawing, referred to as severity 1), the transmission destination is one of the crew member terminal 10 and the instructor apparatus 30. Meanwhile, when the acceleration or deceleration exceeds the reference value (in the drawing, referred to as severity 2), the transmission destination is both the crew member terminal 10 and the instructor apparatus 30. Further, when a degree of severity of a traffic violation is relatively low (for example, when an exceeding value of velocity is equal to or less than a reference value (for example, 5 km/h)), the transmission destination is one of the crew member terminal 10 and the instructor apparatus 30. Meanwhile, when a degree of severity of a traffic violation is high (for example, when an exceeding value of velocity exceeds the reference value (for example, 5 km/h)), the transmission destination is both the crew member terminal 10 and the instructor apparatus 30.

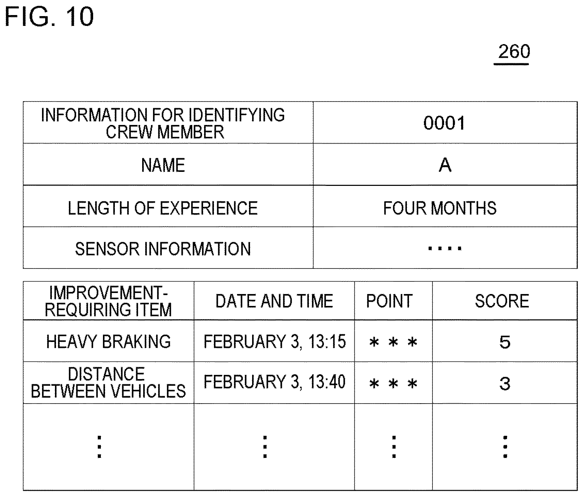

Fig. 10 is a diagram illustrating one example of information stored in the crew member information storage unit 260. The crew member information storage unit 260 stores, for each crew member, crew member identification information (for example, information for identification assigned to a crew member), a name, a time length of experience, sensor information, and information on the detected improvement-requiring item. The information on the improvement-requiring item includes a content of the improvement-requiring item (for example, an item name), a date and time of detection, and a point of detection. Further, when the detection unit 220 has computed a score for the improvement-requiring item, the information on the improvement-requiring item also includes the score.

Further, an instructor can browse information (for example, at least one of the information on the improvement-requiring item and the sensor information) stored in the crew member information storage unit 260, via the instructor apparatus 30. At this occasion, the instructor may input a search criterion (for example, at least one of crew member identification information, an item name of an improvement-requiring item, a range of a detection date and time, and a range of a detection point) to the instructor apparatus 30. Then, the improvement item detection apparatus 20 reads information satisfying the search criterion from the crew member information storage unit 260, and causes the instructor apparatus 30 to display the read information.

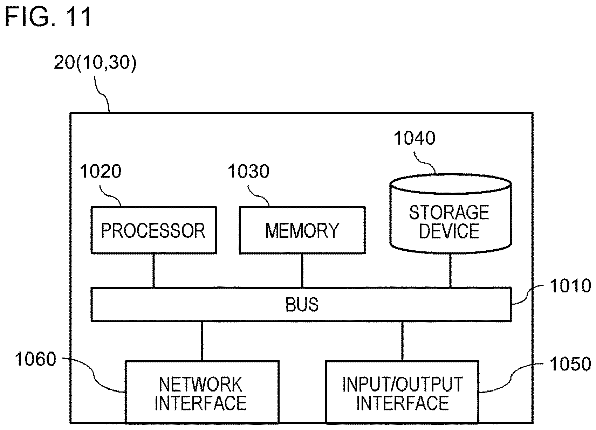

Fig. 11 is a diagram illustrating a hardware configuration example of the improvement item detection apparatus 20. The improvement item detection apparatus 20 includes a bus 1010, a processor 1020, a memory 1030, a storage device 1040, an input/output interface 1050, and a network interface 1060.

The bus 1010 is a data transmission path for the processor 1020, the memory 1030, the storage device 1040, the input/output interface 1050, and the network interface 1060 to mutually transmit and receive data. However, a method for connecting the processor 1020 and the like to one another is not limited to bus connection.

The processor 1020 is a processor achieved with a central processing unit (CPU), a graphics processing unit (GPU), and the like.

The memory 1030 is a main storage device achieved with a random access memory (RAM) and the like.

The storage device 1040 is an auxiliary storage device achieved with a hard disk drive (HDD), a solid state drive (SSD), a memory card, a read only memory (ROM), or the like. The storage device 1040 stores a program module that achieves each function (for example, the acquisition unit 210, the detection unit 220, the selection unit 230, and the transmission unit 240) of the improvement item detection apparatus 20. By the processor 1020 loading each of the program modules on the memory 1030 and executing the program module, each function related to the program module is achieved. Further, the storage device 1040 also functions as the target item storage unit 250 and the crew member information storage unit 260.

The input/output interface 1050 is an interface for connecting the improvement item detection apparatus 20 to various input/output devices. Note that, when the improvement item detection apparatus 20 is a cloud server, the input/output interface 1050 is not required to be provided.

The network interface 1060 is an interface for connecting the improvement item detection apparatus 20 to a network. The network is, for example, a local area network (LAN) or a wide area network (WAN). A method in which the network interface 1060 connects to the network may be wireless connection or wired connection. The improvement item detection apparatus 20 communicates with the crew member terminal 10 and the instructor apparatus 30 via the network interface 1060.

Note that, one example of hardware configurations of the crew member terminal 10 and the instructor apparatus 30 is also as illustrated in Fig. 11.

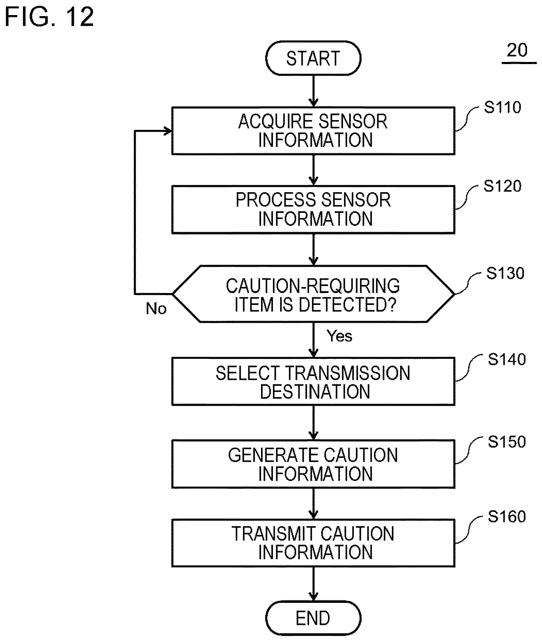

Fig. 12 is a flowchart illustrating one example of processing performed by the improvement item detection apparatus 20. First, the crew member terminal 10 repeatedly transmits sensor information to the improvement item detection apparatus 20 in real time. Then, for each time acquiring the sensor information, the improvement item detection apparatus 20 performs the processing illustrated in the present drawing in real time.

The acquisition unit 210 of the improvement item detection apparatus 20 acquires the sensor information (step S 110). Next, the detection unit 220 detects an improvement-requiring item by processing the acquired sensor information (step S120). When a caution-requiring item is not detected (step S130: No), the processing returns to step S110.

When the caution-requiring item is detected (step S130: Yes), selection unit 230 selects a transmission destination of caution information by using information on the detected caution-requiring item (step S140). Then, the transmission unit 240 generates the caution information (step S150). At this occasion, as necessary, the transmission unit 240 changes information included in the caution information according to the transmission destination. Then, the transmission unit 240 transmits the generated caution information to the transmission destination (step S160).

When the transmission destination includes the crew member terminal 10, the crew member terminal 10 performs processing (for example, outputting a ringtone) for notifying a crew member that the caution information is received. Then, the crew member terminal 10 displays the caution information at a timing when the crew member looks at the crew member terminal 10. The caution information includes at least a content of the caution-requiring item.

Meanwhile, when the transmission destination includes the instructor apparatus 30, the instructor apparatus 30 immediately displays the caution information. The caution information at least includes a content of the caution-requiring item and crew member identification information. Note that, when displaying the caution information, the instructor apparatus 30 may include a name of a crew member, and the like as part of the crew member identification information. In this case, the name and the like may be included in the caution information initially transmitted by the improvement item detection apparatus 20, or may be requested from the instructor apparatus 30 to the improvement item detection apparatus 20 after the caution information is received by the instructor apparatus 30.

Note that, apart from the processing illustrated in Fig. 12, the improvement item detection apparatus 20 may add up, for each crew member, scores in a day. Further, when a total value of the scores exceeds a reference, the improvement item detection apparatus 20 may immediately transmit information indicating that the total value exceeds the reference to the instructor apparatus 30, and cause the instructor apparatus 30 to display the information. The reference used herein may be set for each crew member. As one example, the instructor apparatus 30 may set the reference by using a length of experience of a crew member.

Further, apart from the processing illustrated in Fig. 12, the transmission unit 240 of the improvement item detection apparatus 20 may constantly transmit, to the instructor apparatus 30, at least one of image data generated by the first imaging unit 111 and image data generated by the second imaging unit 112, and location data generated by the detection unit 115. In this case, the transmission unit 240 also transmits the crew member identification information, along with these pieces of image data. Further, the instructor apparatus 30 displays these pieces of image data in real time, along with the crew member identification information.

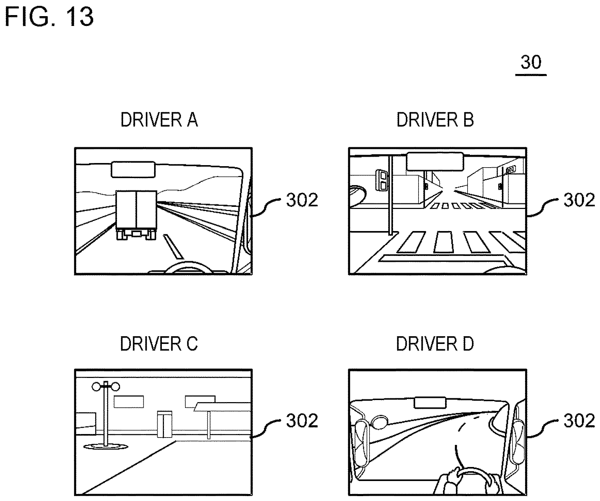

Fig. 13 is a diagram illustrating a first example of a screen displayed by the instructor apparatus 30. In the example illustrated in the present drawing, a plurality of crew members are assigned to one instructor. Therefore, a plurality of the crew member terminals 10 are associated with the single instructor apparatus 30. Further, the instructor apparatus 30 displays a plurality of pieces of image data generated by the plurality of crew member terminals 10, in real time. At this occasion, the instructor apparatus 30 displays the image data, in association with information (for example, a name) on the crew member related to the image data. Thereby, an instructor can recognize a situation of each crew member by looking at the instructor apparatus 30.

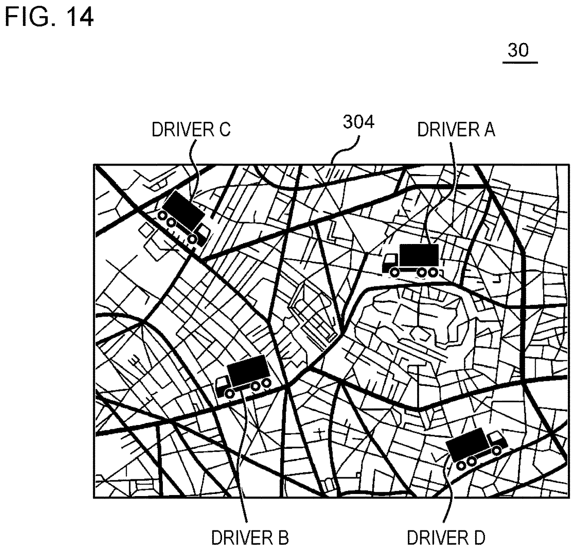

Fig. 14 is a diagram illustrating a second example of the screen displayed by the instructor apparatus 30. Also in the example illustrated in the present drawing, a plurality of crew members are assigned to one instructor. Then, the instructor apparatus 30 displays a map. On the map, the instructor apparatus 30 may preliminarily display, at a point where a caution-requiring item is frequently detected, a mark indicating that the caution-requiring item is frequently detected. The mark may be changed, for example, according to a type of the caution-requiring item, or may be changed according to a frequency of detection.

Further, the instructor apparatus 30 displays a current location of each of the plurality of crew members on the map. At this occasion, the instructor apparatus 30 may further display other information. Information displayed herein is customized, for example, by an instructor, and one example of the information includes at least one of a travel history (specifically, a route traveled), velocity, and whether the driver is taking a break for each of the plurality of crew members. Note that, the travel history may include a location of stop and a time length of stop. When a crew member is a delivery driver of a delivery vehicle, the time length of stop corresponds to a time taken to make a delivery.

Then, when an instructor selects the current location, the instructor apparatus 30 displays information (including at least part of the sensor information) on a crew member associated with the current location. The information displayed herein may also be customized by the instructor.

Further, as described with reference to Fig. 10, an instructor can browse information stored in the crew member information storage unit 260 via the instructor apparatus 30.

Thus, according to the present example embodiment, by using the improvement item detection apparatus 20, information on a plurality of crew members can be displayed on the single instructor apparatus 30. At this occasion, the improvement item detection apparatus 20 narrows down information to be displayed on the instructor apparatus 30. Therefore, a workload on an instructor is reduced.

### (Second Example Embodiment)

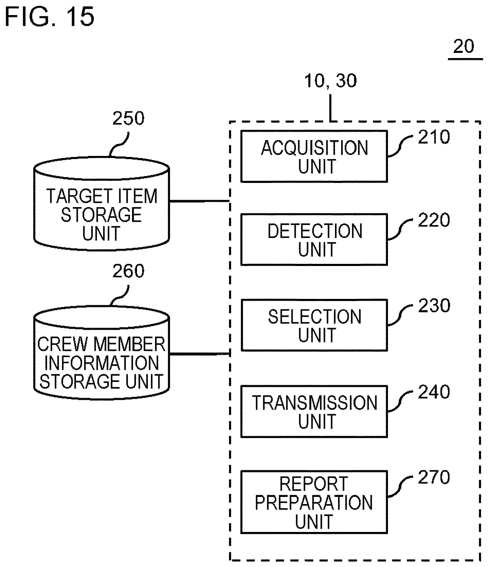

Fig. 15 is a diagram illustrating a functional configuration of an improvement item detection apparatus 20 according to the present example embodiment. The improvement item detection apparatus 20 illustrated in the present drawing has a similar function as that of the improvement item detection apparatus 20 according to the first example embodiment, except that the improvement item detection apparatus 20 according to the present example embodiment includes a report preparation unit 270.

The report preparation unit 270 generates report information for each crew member, and transmits the generated report information to at least one of a crew member terminal 10 and an instructor apparatus 30. The report information includes information on a detected improvement-requiring item. The report information is generated at predetermined intervals (for example, daily, weekly, or monthly). Further, an instructor may add, to the report information transmitted to the instructor apparatus 30, information indicating a content of improvement required of the crew member (specifically, a content of instruction from the instructor to the crew member). In this case, the improvement item detection apparatus 20 stores the added information in a crew member information storage unit 260, and also transmits, to the crew member terminal 10, the report information after the addition.

Also according to the present example embodiment, a workload on an instructor is reduced. Further, since the report preparation unit 270 generates report information for each of a plurality of crew members, a workload on an instructor is further reduced.

### (Third Example Embodiment)

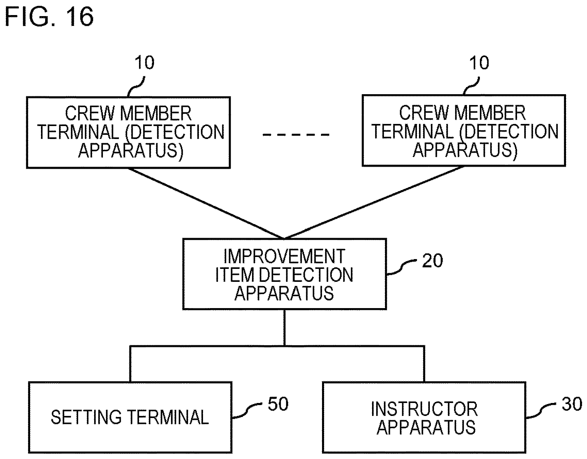

Fig. 16 is a diagram for describing a usage environment of an improvement item detection apparatus 20 according to the present example embodiment. The improvement item detection apparatus 20 include a function similar to that according to any of the above-described example embodiments, except that an improvement-requiring item to be a detection target can be set by using a setting terminal 50. The setting terminal 50 is managed by a company employing a crew member. Further, a target item storage unit 250 of the improvement item detection apparatus 20 stores information illustrated in Figs. 6 to 10, for each company.

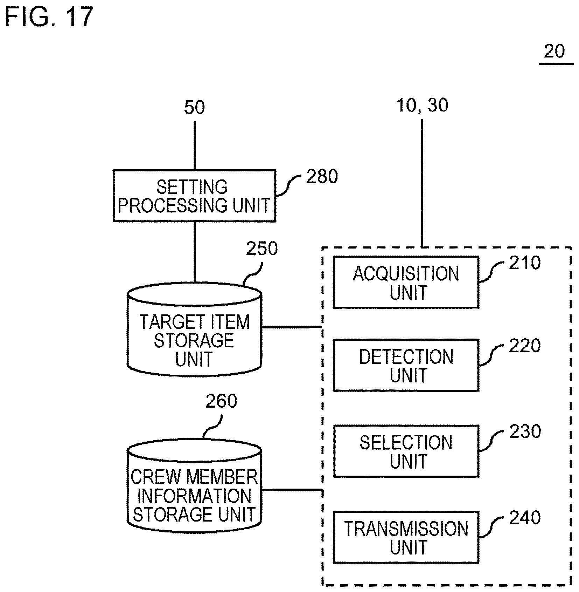

Fig. 17 is a diagram illustrating one example of a functional configuration of the improvement item detection apparatus 20. In the example illustrated in the present drawing, a configuration of the improvement item detection apparatus 20 is similar to that of the improvement item detection apparatus 20 according to the first example embodiment, except that the improvement item detection apparatus 20 according to the present example embodiment includes a setting processing unit 280. Note that, the improvement item detection apparatus 20 according to the second example embodiment may include the setting processing unit 280.

The setting processing unit 280 causes the setting terminal 50 to display a setting screen. The setting screen is a screen for setting an improvement-requiring item to be a detection target. Further, the setting processing unit 280 updates the target item storage unit 250 in such a way that an item set by using the screen becomes a target. Accordingly, information included in sensor information is also updated. Further, the setting screen displayed on the setting terminal 50 may allow setting of at least one of a date on which and a time slot in which the improvement item detection apparatus 20 performs processing. In this case, the improvement item detection apparatus 20 operates on the set date and/or in the set time slot. Timing of updating a content of the setting may be any timing.

Also according to the present example embodiment, a workload on an instructor is reduced. Further, since the improvement item detection apparatus 20 can narrow down improvement-requiring items to be a detection target, a workload on an instructor is further reduced.

While the example embodiments of the present invention has been described with reference to the drawings, the example embodiments are examples of the present invention, and various configurations other than those described above may be adopted.

Further, although a plurality of steps (pieces of processing) are described in order in the flowcharts referred to in the above description, an order of executing the steps in each example embodiment is not limited to an order described in the flowcharts. In each example embodiment, an order of the illustrated steps may be changed to an extent that contents thereof are not interfered. Further, each of the above-described example embodiments can be combined to an extent that contents thereof do not conflict with each other.

A part or the entirety of the above-described example embodiments may be described as the following supplementary notes, but is not limited thereto.
1. An improvement item detection apparatus including:
   an acquisition means for acquiring sensor information indicating a result of detection by a sensor of which a detection target is at least one of an evaluation target being at least one of a vehicle and a crew member of the vehicle, and a periphery of the evaluation target;
   a detection means for detecting, by processing the sensor information, an item that needs to be improved by the crew member;
   a selection means for selecting, by using information on the item that needs to be improved, a transmission destination of caution information indicating that the item that needs to be improved is detected; and
   a transmission means for transmitting the caution information to the transmission destination selected by the selection means.
2. The improvement item detection apparatus according to supplementary note 1, in which
   the selection means selects the transmission destination by using a type of the item that needs to be improved.
3. The improvement item detection apparatus according to supplementary note 1 or 2, in which
   the detection means decides a degree of severity or a degree of urgency of the item that needs to be improved for the crew member, and
   the selection means selects the transmission destination by using the degree of severity or the degree of urgency.
4. The improvement item detection apparatus according to any one of supplementary notes 1 to 3, in which
   the selection means selects the transmission destination from among a first apparatus for the crew member to recognize the caution information, a second apparatus for an instructor of the crew member to recognize the caution information, and both the first apparatus and the second apparatus.
5. The improvement item detection apparatus according to supplementary note 4, in which,
   when the first apparatus is included in the transmission destination, the caution information to be transmitted to the first apparatus includes an item name of the item that needs to be improved.
6. The improvement item detection apparatus according to supplementary note 4 or 5, in which,
   when the second apparatus is included in the transmission destination, the caution information to be transmitted to the second apparatus includes crew member identification information from which the crew member can be identified and an item name of the item that needs to be improved.
7. The improvement item detection apparatus according to any one of supplementary notes 4 to 6, in which,
   when the first apparatus and the second apparatus are included in the transmission destination, at least a part of one of the caution information to be transmitted to the first apparatus and the caution information to be transmitted to the second apparatus is not included in the other.
8. The improvement item detection apparatus according to any one of supplementary notes 4 to 7, in which
   the sensor is mounted on a portable terminal possessed by the crew member, and
   the first apparatus is the portable terminal.
9. The improvement item detection apparatus according to any one of supplementary notes 1 to 8, in which
   the sensor information indicates a result of detecting the crew member and /or a periphery of the crew member when the vehicle is stopped and the crew member is outside the vehicle.
10. The improvement item detection apparatus according to supplementary note 9, in which
   the crew member serves a customer when the crew member is outside the vehicle, and
   the item that needs to be improved is an item related to customer service.
11. The improvement item detection apparatus according to supplementary note 9, in which
   the crew member performs work on the vehicle when the crew member is outside the vehicle, and
   the item that needs to be improved is an item related to the work.
12. The improvement item detection apparatus according to any one of supplementary notes 1 to 8, in which
   the sensor information indicates a location of the vehicle, and
   the item that needs to be improved is related to a location where the vehicle is stopped.
13. The improvement item detection apparatus according to any one of supplementary notes 1 to 11, further including
   a setting processing means for causing a terminal to display a setting screen for setting the item that needs to be improved to be detected by the detection means, in which
   the detection means sets, as a detection target, an item set by using the setting screen.
14. An improvement item detection method, including,
   by a computer executing:
   acquisition processing of acquiring sensor information indicating a result of detection by a sensor of which detection target is at least one of an evaluation target being at least one of a vehicle and a crew member of the vehicle, and a periphery of the evaluation target;
   detection processing of detecting, by processing the sensor information, an item that needs to be improved by the crew member;
   selection processing of selecting, by using information on the item that needs to be improved, a transmission destination of caution information indicating that the item that needs to be improved is detected; and
   transmission processing of transmitting the caution information to the selected transmission destination.
15. The improvement item detection method according to supplementary note 14, further including,
   by the computer,
   in the selection processing, selecting the transmission destination by using a type of the item that needs to be improved.
16. The improvement item detection method according to supplementary note 14 or 15, further including
   by the computer:
   in the detection processing, deciding a degree of severity or a degree of urgency of the item that needs to be improved for the crew member; and,
   in the selection processing, selecting the transmission destination by using the degree of severity or the degree of urgency.
17. The improvement item detection method according to any one of supplementary notes 14 to 16, further including,
   by the computer,
   in the selection processing, selecting the transmission destination from among a first apparatus for the crew member to recognize the caution information, a second apparatus for an instructor of the crew member to recognize the caution information, and both the first apparatus and the second apparatus.
18. The improvement item detection method according to supplementary note 17, in which,
   when the first apparatus is included in the transmission destination, the caution information to be transmitted to the first apparatus includes an item name of the item that needs to be improved.
19. The improvement item detection method according to supplementary note 17 or 18, in which,
   when the second apparatus is included in the transmission destination, the caution information to be transmitted to the second apparatus includes crew member identification information from which the crew member can be identified and an item name of the item that needs to be improved.
20. The improvement item detection method according to any one of supplementary notes 17 to 19, in which,
   when the first apparatus and the second apparatus are included in the transmission destination, at least a part of one of the caution information to be transmitted to the first apparatus and the caution information to be transmitted to the second apparatus is not included in the other.
21. The improvement item detection method according to any one of supplementary notes 17 to 20, in which
   the sensor is mounted on a portable terminal possessed by the crew member, and
   the first apparatus is the portable terminal.
22. The improvement item detection method according to any one of supplementary notes 14 to 21, in which
   the sensor information indicates a result of detecting the crew member and/or a periphery of the crew member when the vehicle is stopped and the crew member is outside the vehicle.
23. The improvement item detection method according to supplementary note 22, in which
   the crew member serves a customer when the crew member is outside the vehicle, and
   the item that needs to be improved is an item related to customer service.
24. The improvement item detection method according to supplementary note 22, in which
   the crew member performs work on the vehicle when the crew member is outside the vehicle, and
   the item that needs to be improved is an item related to the work.
25. The improvement item detection method according to any one of supplementary notes 14 to 21, in which
   the sensor information indicates a location of the vehicle, and
   the item that needs to be improved is related to a location where the vehicle is stopped.
26. The improvement item detection method according to any one of supplementary notes 14 to 24, further including,
   by the computer:
   executing setting processing of causing a terminal to display a setting screen for setting the item that needs to be improved to be detected in the detection processing; and,
   in the detection processing, setting, as a detection target, an item set by using the setting screen.
27. A program causing a computer to include:
   an acquisition function of acquiring sensor information indicating a result of detection by a sensor of which detection target is at least one of an evaluation target being at least one of a vehicle and a crew member of the vehicle, and a periphery of the evaluation target;
   a detection function of detecting, by processing the sensor information, an item that needs to be improved by the crew member;
   a selection function of selecting, by using information on the item that needs to be improved, a transmission destination of caution information indicating that the item that needs to be improved is detected; and
   a transmission function of transmitting the caution information to the transmission destination selected by the selection function.
28. The program according to supplementary note 27, in which
   the selection function selects the transmission destination by using a type of the item that needs to be improved.
29. The program according to supplementary note 27 or 28, in which
   the detection function decides a degree of severity or a degree of urgency of the item that needs to be improved for the crew member, and
   the selection function selects the transmission destination by using the degree of severity or the degree of urgency.
30. The program according to any one of supplementary notes 27 to 29, in which
   the selection function selects the transmission destination from among a first apparatus for the crew member to recognize the caution information, a second apparatus for an instructor of the crew member to recognize the caution information, and both the first apparatus and the second apparatus.
31. The program according to supplementary note 30, in which,
   when the first apparatus is included in the transmission destination, the caution information to be transmitted to the first apparatus includes an item name of the item that needs to be improved.
32. The program according to supplementary note 30 or 31, in which,
   when the second apparatus is included in the transmission destination, the caution information to be transmitted to the second apparatus includes crew member identification information from which the crew member can be identified and an item name of the item that needs to be improved.
33. The program according to any one of supplementary notes 30 to 32, in which,
   when the first apparatus and the second apparatus are included in the transmission destination, at least a part of one of the caution information to be transmitted to the first apparatus and the caution information to be transmitted to the second apparatus is not included in the other.
34. The program according to any one of supplementary notes 30 to 33, in which
   the sensor is mounted on a portable terminal possessed by the crew member, and
   the first apparatus is the portable terminal.
35. The program according to any one of supplementary notes 27 to 34, in which
   the sensor information indicates a result of detecting the crew member and/or a periphery of the crew member when the vehicle is stopped and the crew member is outside the vehicle.
36. The program according to supplementary note 35, in which
   the crew member serves a customer when the crew member is outside the vehicle, and
   the item that needs to be improved is an item related to customer service.
37. The program according to supplementary note 35, in which
   the crew member performs work on the vehicle when the crew member is outside the vehicle, and
   the item that needs to be improved is an item related to the work.
38. The program according to any one of supplementary notes 27 to 34, in which
   the sensor information indicates a location of the vehicle, and
   the item that needs to be improved is related to a location where the vehicle is stopped.
39. The program according to any one of supplementary notes 27 to 37, causing the computer to further include
   a setting processing function of causing a terminal to display a setting screen for setting the item that needs to be improved to be detected by the detection function, in which
   the detection function sets, as a detection target, an item set by using the setting screen.

### REFERENCE SIGNS LIST

- 10: Crew member terminal
- 20: Improvement item detection apparatus
- 30: Instructor apparatus
- 40: Vehicle-mounted apparatus
- 50: Setting terminal
- 110: Sensor
- 111: First imaging unit
- 112: Second imaging unit
- 113: Sound recording unit
- 114: Acceleration sensor
- 115: Location detection unit
- 120: Communication unit
- 130: Notification processing unit
- 141: Display
- 142: Speaker
- 210: Acquisition unit
- 220: Detection unit
- 230: Selection unit
- 240: Transmission unit
- 250: Target item storage unit
- 260: Crew member information storage unit
- 270: Report preparation unit
- 280: Setting processing unit

## Claims

1. An improvement item detection apparatus, comprising:
an acquisition means for acquiring sensor information indicating a result of detection by a sensor of which a detection target is at least one of an evaluation target being at least one of a vehicle and a crew member of the vehicle, and a periphery of the evaluation target;
a detection means for detecting, by processing the sensor information, an item that needs to be improved by the crew member;
a selection means for selecting, by using information on the item that needs to be improved, a transmission destination of caution information indicating that the item that needs to be improved is detected; and
a transmission means for transmitting the caution information to the transmission destination selected by the selection means.

2. The improvement item detection apparatus according to claim 1, wherein
the selection means selects the transmission destination by using a type of the item that needs to be improved.

3. The improvement item detection apparatus according to claim 1 or 2, wherein
the detection means decides a degree of severity or a degree of urgency of the item that needs to be improved for the crew member, and
the selection means selects the transmission destination by using the degree of severity or the degree of urgency.

4. The improvement item detection apparatus according to any one of claims 1 to 3, wherein
the selection means selects the transmission destination from among a first apparatus for the crew member to recognize the caution information, a second apparatus for an instructor of the crew member to recognize the caution information, and both the first apparatus and the second apparatus.

5. The improvement item detection apparatus according to claim 4, wherein,
when the first apparatus is included in the transmission destination, the caution information to be transmitted to the first apparatus includes an item name of the item that needs to be improved.

6. The improvement item detection apparatus according to claim 4 or 5, wherein,
when the second apparatus is included in the transmission destination, the caution information to be transmitted to the second apparatus includes crew member identification information from which the crew member can be identified and an item name of the item that needs to be improved.

7. The improvement item detection apparatus according to any one of claims 4 to 6, wherein,
when the first apparatus and the second apparatus are included in the transmission destination, at least a part of one of the caution information to be transmitted to the first apparatus and the caution information to be transmitted to the second apparatus is not included in the other.

8. The improvement item detection apparatus according to any one of claims 4 to 7, wherein
the sensor is mounted on a portable terminal possessed by the crew member, and
the first apparatus is the portable terminal.

9. The improvement item detection apparatus according to any one of claims 1 to 8, wherein
the sensor information indicates a result of detecting the crew member and/or a periphery of the crew member when the vehicle is stopped and the crew member is outside the vehicle.

10. The improvement item detection apparatus according to claim 9, wherein
the crew member serves a customer when the crew member is outside the vehicle, and the item that needs to be improved is an item related to customer service.

11. The improvement item detection apparatus according to claim 9, wherein
the crew member performs work on the vehicle when the crew member is outside the vehicle, and
the item that needs to be improved is an item related to the work.

12. The improvement item detection apparatus according to any one of claims 1 to 8, wherein
the sensor information indicates a location of the vehicle, and
the item that needs to be improved is related to a location where the vehicle is stopped.

13. The improvement item detection apparatus according to any one of claims 1 to 11, further comprising
a setting processing means for causing a terminal to display a setting screen for setting the item that needs to be improved to be detected by the detection means, wherein
the detection means for setting, as a detection target, an item set by using the setting screen.

14. An improvement item detection method, comprising,
by a computer executing:
acquisition processing of acquiring sensor information indicating a result of detection by a sensor of which a detection target is at least one of an evaluation target being at least one of a vehicle and a crew member of the vehicle, and a periphery of the evaluation target;
detection processing of detecting, by processing the sensor information, an item that needs to be improved by the crew member;
selection processing of selecting, by using information on the item that needs to be improved, a transmission destination of caution information indicating that the item that needs to be improved is detected; and
transmission processing of transmitting the caution information to the selected transmission destination.

15. A program causing a computer to include:
an acquisition function of acquiring sensor information indicating a result of detection by a sensor of which a detection target is at least one of an evaluation target being at least one of a vehicle and a crew member of the vehicle, and a periphery of the evaluation target;
a detection function of detecting, by processing the sensor information, an item that needs to be improved by the crew member;
a selection function of selecting, by using information on the item that needs to be improved, a transmission destination of caution information indication that the item that needs to be improved is detected; and
a transmission function of transmitting the caution information to the transmission destination selected by the selection function.
